Europäisches Patentamt

European Patent Office

Office européen des brevets

(11) Publication number: **0 108 543**
**B1**

# EUROPEAN PATENT SPECIFICATION

(45) Date of publication of patent specification: **10.12.86**

(51) Int. Cl.⁴: **F 16 C 9/04, F 16 C 43/04**

(21) Application number: **83306452.0**

(22) Date of filing: **24.10.83**

(54) Assembly of connecting rod and crankshaft.

(30) Priority: **25.10.82 US 437363**

(43) Date of publication of application:
**16.05.84 Bulletin 84/20**

(45) Publication of the grant of the patent:
**10.12.86 Bulletin 86/50**

(84) Designated Contracting States:
**DE FR GB IT**

(56) References cited:
**DE-A-2 908 782**
**FR-A-2 303 644**
**US-A-3 241 896**
**US-A-3 581 599**

(73) Proprietor: **TECUMSEH PRODUCTS COMPANY**
**100 East Patterson Street**
**Tecumseh Michigan 49286 (US)**

(72) Inventor: **Kaufman, Vernon Ray**
**10634 Crestview Drive**
**Cedarburg Wisconsin 53012 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

## Description

The present invention relates to a technique for assembling connecting rods and crankshafts.

Connecting rods for coupling pistons and crankshafts may be broadly categorized in two types. The first type referred to herein as a split ring connecting rod is more sophisticated and expensive and may be formed from a wide variety of materials with the ring or portion thereof which surrounds the crankshaft being formed as two split C-Shaped halves each containing an inner bearing surface and boltable together, often with shims, in position about the crankshaft. The second type referred to herein as a one piece connecting rod includes an elongate arm portion with enlarged annular portions at the opposite ends thereof and is assembled by passing one of those annular portions over an end of a crankshaft and along the crankshaft into approximate final position with rollers being inserted intermediate the crankshaft and annular portion whereupon the crankshaft is repositioned somewhat to trap the rollers between the annular portion and the crankshaft. The present invention applies exclusively to this second type of connecting rod.

Connecting rods of the second type have heretofore usually been formed from a steel stamping or forging hardened by a carbonizing process and having the inner annular surface which forms the outer crankshaft bearing race ground to form a good bearing surface. Two undesirable features of such known connecting rods of the second type are their expense and their undesirably high mass.

Devices which convert between rotary crankshaft motion and reciprocating piston motion, such as internal combusion engines, compressors, steam engines, and the like, vibrate or shake due to the inertial effects of the internal moving parts. Typically, these inertial effects are only partially counterbalanced with the net result that the vibrations experienced by such machines during operations are determined by the masses of the several internal moving parts with greater mass resulting in greater vibration. Reduction in the mass of a given moving part within such devices may also allow a reduction in counterweight or counterbalancing masses yielding overall vibration reduction which is substantially greater than that due to the reduction in mass of the moving part per se. Thus, a small reduction in mass may result in a substantial reduction in device vibrations.

DE—A—2908782 discloses a one piece connecting rod of a light-weight material having a big end bearing comprising a hardened steel sleeve pressed into an opening in the rod and serving as an outer bearing race for rollers disposed between the connecting rod and a crankshaft.

US—A—3581599 discloses a method of fabricating and assembling a connecting rod and a crankshaft comprising casting a connecting rod blank having openings near opposite ends thereof; boring one of the openings to a predetermined size; and assembling the connecting rod and crankshaft by passing the connecting rod over the crankshaft and interposing rollers between the connecting rod and a cylindrical surface of the crankshaft forming an inner bearing race having two enlarged crankshaft portions one at each side.

The enlarged crankshaft portions make it impossible to slide all of the rollers over one of the portions and into the gap between the connecting rod and the cylindrical surface of the crankshaft, and as particularly described in the above document, to enable the last few rollers to be inserted, a part of one of the portions is cut away. Access to this cut-away part is obtained via a hole in a neighbouring crankshaft web which is plugged after the last roller has been inserted.

According to the present invention, a method of the kind described in the preceding paragraph but one is characterized by the connecting rod blank being cast from a lightweight metal; pressing a sleeve into the bored opening, the sleeve being of a metal which is harder than the lightweight metal and which is of sufficient hardness to enable the inner surface of the sleeve to act as an outer bearing race; and the assembly step comprising the steps of wrapping a strip of rollers about the cylindrical surface forming the inner bearing race on the crankshaft, and passing the sleeve and connecting rod over the crankshaft and the rollers until they are in concentric alignment with the rollers and the inner bearing race, whereby the rollers are confined by the inner bearing race of the crankshaft, the outer bearing race of the sleeve and the enlarged crankshaft portions of the crankshaft. The step of wrapping the strip of roller enables all of the rollers to be positioned ready for, and maintained in position during, the subsequent step of passing the sleeve and rod over the crankshaft.

An example of a connecting rod and crankshaft fabricated and assembled in accordance with the method of the present invention will now be described with reference to the accompanying drawings, in which:—

Fig. 1 is an expanded perspective view of the connecting rod and crankshaft prior to assembly; and,

Fig. 2 is an exemplary block diagram illustrating the steps in the process of fabricating and assembling the connecting rod and crankshaft of Figure 1.

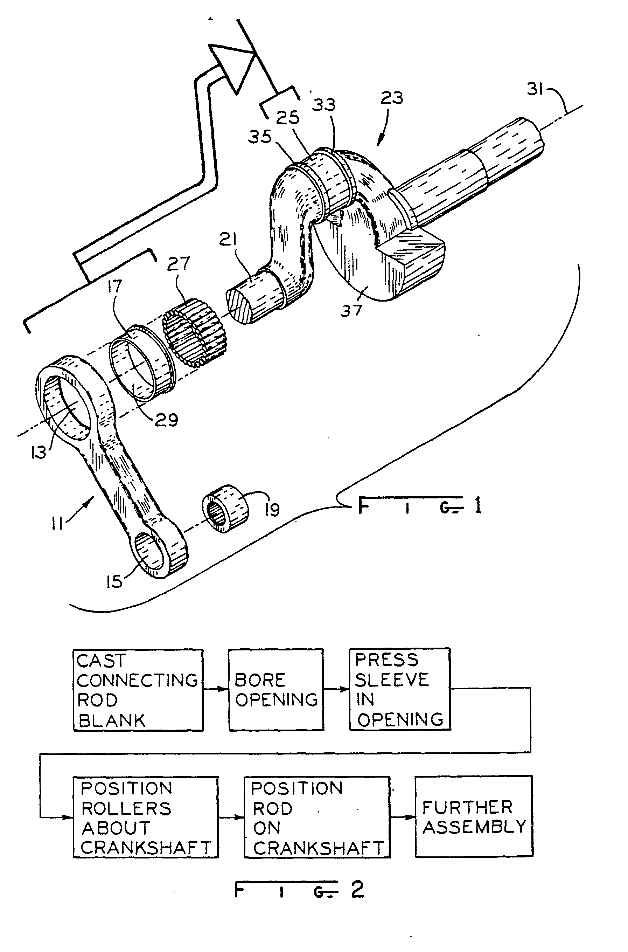

Referring to the drawing generally, a connecting rod 11 is first cast of aluminium alloy or similar lightweight metal and of inadequate hardness to form a roller bearing race with the connecting rod blank having openings 13 and 15 near opposite ends thereof. The opening 13 is then reamed or otherwise bored to a preferred internal diameter and a steel sleeve 17 is press fitted within the opening 13. A roller or sleeve bearing assembly 19 may be positioned within the opening 15.

A series of rollers 27 is then positioned about an inner bearing race portion 25 on an eccentric part of a crankshaft 23 by wax bonding the rollers to a strip and wrapping the strip about the crankpin. The connecting rod 11 and associated sleeve are then moved over an end 21 of the crankshaft into their final aligned position with the bearing race portion 25. Further assembly such as passing a piston wrist pin through the bearing 19 and assembling the crank connecting rod and piston within an engine housing may occur at any convenient time in the assembly process.

Positioning the rollers 27 about the crankshaft 23 and thereafter aligning the sleeve 17 and the crankshaft traps the rollers between the sleeve 17 and the inner bearing race 25. The sleeve 17 has an inner surface 29 which forms the outer bearing race and the cylindrical surface 25 of the crankshaft 23 forms an inner bearing race which is generally parallel to and displaced from the crankshaft axis of rotation 31. Further journalling of the crankshaft 23 may occur in any conventional manner. The crankshaft 23 includes enlarged crankshaft portions 33 and 35 which trap the rollers 27 in an axial direction while the sleeve 17 confines the rollers radially inwardly and the inner bearing race 25 confines the rollers radially outwardly. So long as no further substantial axial movement between the sleeve 17 and cylindrical surface 25 occurs, the rollers 27 will remain trapped therebetween. The piston pin bosses restrain the axial movement of the rod after engine assembly. Surfaces 25 and 29 are typically hardened.

The cost of the aluminium connecting rod 11 and steel liner 17 with the opening 13 bored and the liner 17 positioned therein is about the same as the cost of a stamped connecting rod blank before the hardening and grinding which is required with such stamped steel connecting rods. The mass of such a steel connecting rod is about two and one-half times the mass of the aluminium connecting rod 11 and that mass reduction also results in a reduction of the mass of the crankshaft counterweight 37 thereby reducing the shaking forces in the engine.

## Claims

1. A method of fabricating and assembling a connecting rod (11) and a crankshaft (23), the method comprising casting a connecting rod blank having openings (13, 15) near opposite ends thereof; boring one of the openings (13) to a predetermined size; and assembling the connecting rod and crankshaft by passing the connecting rod over the crankshaft and interposing rollers (27) between the connecting rod and a cylindrical surface (25) of the crankshaft forming an inner bearing race having two enlarged crankshaft portions (33, 35) one at each side, the method being characterized by the connecting rod blank being cast from a lightweight metal; pressing a sleeve (17) into the bored opening (13), the sleeve being of a metal which is harder than the lightweight metal and which is of sufficient hardness to enable the inner surface (29) of the sleeve to act as an outer bearing race; and the assembly step comprising the steps of wrapping a strip of rollers (27) about the cylindrical surface (25) forming the inner bearing race on the crankshaft, and passing the sleeve (17) and connecting rod (11) over the crankshaft (23) and the rollers (27) until they are in concentric alignment with the rollers and the inner bearing race, whereby, the rollers are confined by the inner bearing race (25) of the crankshaft, the outer bearing race (29) of the sleeve and the enlarged crankshaft portions (33, 35) of the crankshaft.

2. A method according to claim 1, including the step of precluding roller removal by preventing substantial axial movement between the sleeve and the cylindrical surface by restraining movement of the connecting rod in the axial direction of the crankshaft.

3. A method according to claim 1 or claim 2, wherein the strip of rollers (27) is bonded with wax.

4. A method according to any one of the preceding claims, wherein the sleeve has a single outwardly projecting flange, the flange being adjacent to one end and the method further comprising the step of orientating the connecting rod and inserted sleeve so that the flange is, after the assembly step, adjacent to a counterweight on the crankshaft.

## Revendications

1. Procédé de fabrication et de montage d'une bielle (11) et d'un vilebrequin (23), le procédé comportant de fait de mouler une pièce brute pour bielle présentant des ouvertures (13, 15) près de ses extrémités opposées; le fait d'aléser l'une des ouvertures (13) à une cote prédéterminée; et le fait de monter la bielle et le vilebrequin en faisant passer la bielle par-dessus le vilebrequin et en interposant des rouleaux (27) entre la bielle et une surface cylindrique (25) du vilebrequin formant une piste de portée intérieure présentant deux portions agrandies du vilebrequin (33, 35), une de chaque côté, le procédé étant caractérisé par le fait que la pièce brute pour la bielle est moulée à partir d'un métal léger; par le fait que l'on place à la presse une douille (17) dans l'ouverture alésée (13), la douille étant d'un métal plus dur que le métal léger et d'une dureté suffisante pour permettre à la surface intérieure (29) de la douille d'agir comme piste de portée extérieure; les étapes du montage comportant le fait d'enrouler une bande de rouleaux (27) autour de la surface cylindrique (25) formant la piste de portée intérieure du vilebrequin; et de faire passer la douille (17) de la bielle (11) par-dessus le vilebrequin (23) et les rouleaux (27) jusqu'à ce qu'ils soient en alignement concentrique avec les rouleaux et la piste formant portée intérieure, ce par quoi les rouleaux sont confinés par la piste formant portée intérieure (25) du vilebrequin, la piste formant portée extérieure (29) de la douille et les portions agrandies (33, 35) du vilebrequin.

2. Procédé selon la revendication 1, incluant le fait d'empêcher l'enlèvement des rouleaux en interdisant un déplacement axial substantiel entre la douille et la surface cylindrique en restreignant le déplacement de la bielle dans la direction axiale du vilebrequin.

3. Procédé selon la revendication 1 ou la revendication 2, dans lequel la bande des rouleaux (27) est liée à la cire.

4. Procédé selon l'une quelconque des revendications précédentes, dans lequel la douille présente un unique rebord venant en saillie à l'extérieur, ce rebord étant voisin de l'une des extrémités et le procédé comportant en outre le fait d'orienter la bielle et la douille insérée de façon qu'après montage le rebord soit voisin d'un contrepoids du vilebrequin.

## Patentansprüche

1. Verfahren zum Herstellen und Zusammensetzen einer Pleuelstange (11) und einer Kurbelwelle (23), das Verfahren enthaltend: Gießen eines Pleuelstangenrohlings mit Öffnungen (13, 15) nahe entgegengesetzten Enden desselben; Bohren einer der Öffnungen (13) auf eine vorbestimmte Größe; und Zusammensetzen der Pleuelstange und der Kurbelwelle durch Aufziehen der Pleuelstange und die Kurbelwelle und Zwischensetzen von Kugeln (27) zwischen die Pleuelstange und eine zylindrische Oberfläche (25) der Kurbelwelle, die einen inneren Lagerring bilden, der zwei vergrößerte Kurbelwellenabschnitte (33, 35) zu jeder Seite hat, das Verfahren dadurch gekennzeichnet, daß der Pleuelstangenrohling aus einem Leichtmetall gegossen ist, eine Hülse (17) in die gebohrte Öffnung (13) eingepreßt wird, wobei die Hülse aus einem Metall besteht, das härter als das Leichtmetall ist und das eine ausreichende Härte hat, um zu ermöglichen, daß die Innenseite (29) der Hülse als ein äußerer Lagerring dient; und daß der Zusammensetzungsschritt umfaßt: das Umgeben der Zylindrischen Oberfläche (25), die den inneren Lagerring auf der Kurbelwelle bildet, mit einem Streifen von Rollen, das Überschieben der Hülse (17) und der Pleuelstange (11) über die Kurbelwelle (23) und der Rollen (27), bis sie mit den Rollen und dem inneren Lagerring in konzentrischer Ausrichtung sind, wodurch die Rollen von dem inneren Laufring (25) der Kurbelwelle, dem äußeren Laufring (29) der Hülse und den vergrößerten Kurbelwellenabschnitten (33, 35) der Kurbelwelle festgehalten werden.

2. Verfahren nach Anspruch 1, enthaltend den Schritt des Ausschließens des Rollenentfernens durch Verhindern einer wesentlichen axialen Bewegung zwischen der Hülse und der zylindrischen Oberfläche durch Einschränkung der Bewegung der Pleuelstange in der Axialrichtung der Kurbelwelle.

3. Verfahren nach Anspruch 1 oder 2, bei dem der Streifen aus Rollen (27) mit Wachs verklebt ist.

4. Verfahren nach einem der vorhergehenden Ansprüche, bei dem die Hülse einen einzigen, nach außen vorstehenden Flansch aufweist, wobei der Flansch dem einen Ende benachbart ist, und das Verfahren weiterhin enthaltend den Schritt des Ausrichtens der Kolbenstange und der eingesetzten Hülse derart, daß der Flansch nach dem Zusammensetzschritt dem Gegengewicht der Kurbelwelle benachbart ist.

F I G 1

| CAST CONNECTING ROD BLANK | → | BORE OPENING | → | PRESS SLEEVE IN OPENING | |
| POSITION ROLLERS ABOUT CRANKSHAFT | → | POSITION ROD ON CRANKSHAFT | → | FURTHER ASSEMBLY | |

F I G 2